# EUROPEAN PATENT SPECIFICATION

(11) **EP 3 038 307 B1**
(45) Date of publication and mention of the grant of the patent: **16.10.2019**
(21) Application number: 14838529.7
(22) Date of filing: 20.08.2014
(51) Int. Cl.: H04L 29/06, H04W 12/02, H04W 12/08, H04W 76/10

(54) **METHOD AND DEVICE FOR DISTRIBUTING TRAFFIC BY USING PLURALITY OF NETWORK INTERFACES IN WIRELESS COMMUNICATION SYSTEM**
VERFAHREN UND VORRICHTUNG ZUR VERTEILUNG VON DATENVERKEHR UNTER VERWENDUNG EINER VIELZAHL VON NETZWERKSCHNITTSTELLEN IN EINEM DRAHTLOSKOMMUNIKATIONSSYSTEM
PROCÉDÉ ET DISPOSITIF DE DISTRIBUTION DE TRAFIC UTILISANT UNE PLURALITÉ D'INTERFACES RÉSEAU DANS UN SYSTÈME DE COMMUNICATION SANS FIL

(30) Priority: 20.08.2013 KR 20130098452
(43) Date of publication of application: 29.06.2016
(73) Proprietor: Samsung Electronics Co., Ltd., Gyeonggi-do 16677 (KR)
(72) Inventor: XU, Jiangwei, Suwon-si Gyeonggi-do 16677 (KR); PARK, Yong-Seok, Suwon-si Gyeonggi-do 16677 (KR); YOON, Kang-Jin, Suwon-si Gyeonggi-do 16677 (KR)
(74) Representative: Nederlandsch Octrooibureau
(86) International application number: PCT/KR2014/007705
(87) International publication number: WO 2015/026143

(56) References cited:
- US-A1- 2010 172 267
- US-A1- 2011 013 605
- US-A1- 2012 227 102
- US-B2- 7 149 892

## Description

### Detailed Description of the Invention

### Technical Field

The present invention relates to a method and apparatus for distributing traffic in a wireless communication system that supports a plurality of network interfaces.

### Background Art

With the rapid increase in use of wireless networks, such as a Wireless Fidelity (Wi-Fi) network to provide high-speed packet services, a 3Generation (3G) cellular communication system, or a cellular network (for example, a 4Generation (4G) cellular communication system such as Long Term Evolution (LTE)), the data amount of content that is provided to User Equipment (UE), such as a tablet and a smart phone, capable of using broadband multimedia services through a wireless network is also increasing sharply.

For example, high-quality video content that is provided through a wireless network is created with data of several hundreds of mega-bytes or several giga-bytes. Accordingly, in order to transmit high-quality video content through a wireless network, a high transfer rate is required.

The data amount of applications that are provided by a content provider, such as Google Play Store of Google or App Store of Apple, is generally very large so that one content reaches several giga-bytes. Accordingly, it is difficult to satisfy such a wireless data amount (or transfer rate) through carriers of a single Wi-Fi network or a single cellular network.

In a general wireless communication system, a terminal connects to a cellular network or a Wi-Fi network to use data services. However, the cellular network cannot cooperate with the Wi-Fi network, and also a terminal cannot connect to both the cellular network and the Wi-Fi network at the same time. Meanwhile, in the wireless communication system, download services that support well-known Hypertext Transfer Protocol Security (HTTPS) for security are increasingly used.

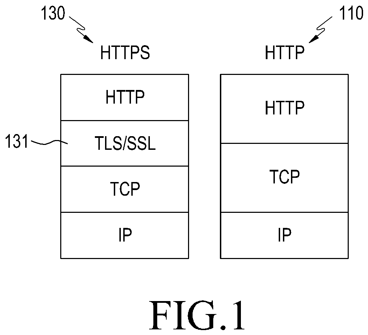

FIG. 1 illustrates protocol stacks of HyperText Transfer Protocol (HTTP) 110 and Hypertext Transfer Protocol Security (HTTPS) 130 that are used in a wireless communication system.

In FIG. 1, the HTTP 110 is a request/response protocol that is used between a terminal and a server so that the terminal which is a client can transmit/receive information to/from the server on the World Wide Web (WWW). For example, if the terminal requests the server to send content through the HTTP 110, the server may transmit the requested content to the terminal, as a HTTP response responding to the HTTP request.

The HTTPS 130 further includes Transport Layer Security (TLS)/Security Socket Layer (SSL) which is a well-known security protocol, compared to the HTTP 110. Since differences between TLS and SSL as security protocols are irrelevant to the present disclosure which will be described below, HTTPS will be, for convenience of description, described based on SSL.

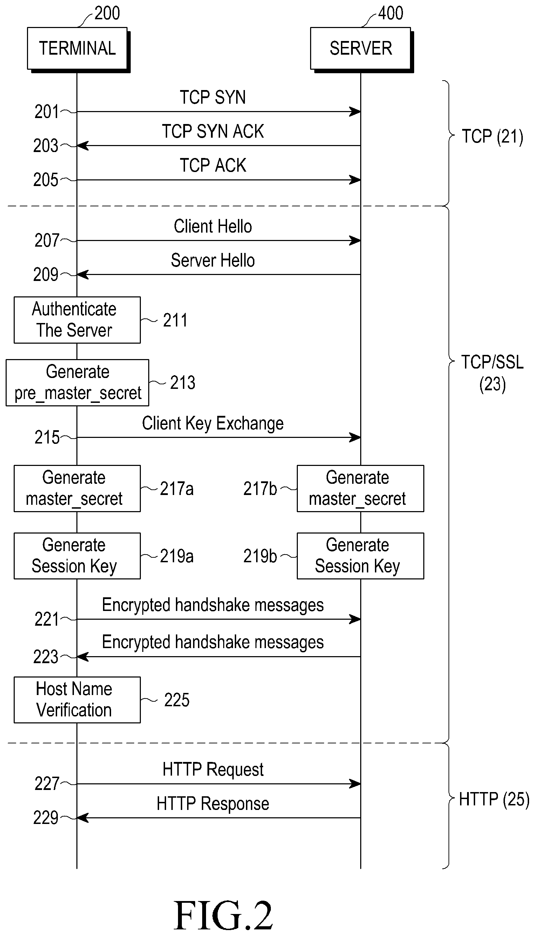

FIG. 2 illustrates a procedure for generating a HTTPS session in a wireless communication system. Hereinafter, operation for generating a HTTPS session between a terminal 200 which is a client and a server 400 will be described with reference to FIG. 2. In steps 201 to 205 of FIG. 2, a Transmission Control Protocol (TCP) session 21 is generated, and in steps 207 to 225, a TCP/SSL session 23 for security is generated, and a HTTP session (that is, a HTTPS session) 25 for transmitting a HTTP request/response is generated through the TCP/SSL session 23.

Operation of generating the TCP/SSL session 23 will be described in detail below. In step 207, the terminal 200 transmits a Client Hello message including the SSL version, encryption settings, and session-specific data of the terminal 200 and other information needed by the server 400, to the server 400. Then, in step 209, the server 400 transmits a Server Hello message including the certificate, SSL version, encryption settings, and session-specific data of the server 400 and other information needed by the terminal 200, to the terminal 200.

In step 211, the terminal 200 authenticates the server 400 using information received from the server 400 through the Server Hello message, and in step 213, the terminal 200 generates a pre-master secret key for session. Then, in step 215, the terminal 200 encrypts the pre-master secret key using a public key of the server 400, and transmits the encrypted pre-master secret key to the server 400. Then, the server 400 decrypts the pre-master secret key received from the terminal 200 using a private key.

Then, in steps 217a and 217b, the terminal 200 and the server 400 each generates a master secret key based on the pre-master secret key, and in steps 219a and 219b, the terminal 200 and the server 400 each generates a session key using the generated master secret key. The session key which is a symmetric key is used to encrypt/decrypt information that is exchanged between the terminal 200 and the server 400 during the SSL session. In steps 221 and 223, the terminal 200 and the server 400 each transmits an encrypted handshake message indicating that its own handshake has completed. In step 225, the terminal 200 verifies a host name, and a TSL/SSL session is generated according to the procedure described above.

US 2012/0227102 discloses techniques for transmitting data securely across virtual private network (VPN) connections. A first VPN connection is initiated between a first device and a second device. The second device selects a first communication protocol to be used for the first VPN connection with the first device. The
first device generates session identification data associated with the first VPN connection and sends the session identification data to the second device over the first VPN. The second device receives the session identification data and stores it. The second device determines when the first VPN connection has been disrupted. The second device then selects a second communication protocol and initiates a second VPN connection using the second communication protocol with the first device. The second device transmits the session identification data to the first device, and the first device associates the second VPN connection with the first VPN connection using session identification data.

### Disclosure

### Technical Problem

After a HTTP session (that is, a HTTPS session) using the TLS/SSL session is generated, requested content is downloaded through the generated HTTPS session. This means that if a HTTPS session is generated, a terminal can use only one TCP session (connection) in order to download requested content through the HTTPS session. Accordingly, when HTTPS is used, a terminal can download requested content through a wireless network for which a HTTPS session has been generated, but the content requested through the HTTPS session cannot use other wireless networks that the terminal supports.

For example, when the terminal requests HTTPS-based content and downloads the HTTPS-based content through a Wi-Fi network, the terminal cannot download the corresponding content through a cellular network, and vice versa. Accordingly, the HTTPS acts as a factor disabling traffic distribution technology in a HTTP-based network.

Accordingly, an embodiment of the present disclosure provides a method and apparatus for enabling a terminal to distribute traffic using a plurality of network interfaces in a wireless communication system.

Also, an embodiment of the present disclosure provides a method and apparatus for distributing traffic in a wireless communication system that supports a plurality of network interfaces and Hypertext Transfer Protocol Security (HTTPS).

Also, an embodiment of the present disclosure provides a terminal and method for using a plurality of network interfaces at the same time to download HTTPS-based content in a wireless communication system.

### Technical Solution

The present invention is directed to subject-matter as disclosed by the appended claims.

### BRIEF DESCRIPTION OF THE DRAWINGS

FIG. 1 illustrates protocol stacks of HyperText Transfer Protocol (HTTP) and Hypertext Transfer Protocol Security (HTTPS) that are used in a wireless communication system;
FIG. 2 illustrates a procedure for generating a HTTPS session in a wireless communication system;
FIG. 3 illustrates a configuration of a terminal of using a plurality of network interfaces in a wireless communication system according to an embodiment of the present disclosure;
FIG. 4 is a flowchart illustrating a communication method of a terminal using a plurality of network interfaces in a wireless communication system, according to an embodiment of the present disclosure;
FIGS. 5A and 5B are flowcharts illustrating a method of distributing traffic using a plurality of network interfaces in a wireless communication system, according to an embodiment of the present disclosure; and
FIG. 6 is a flowchart illustrating a method of enabling a terminal to determine whether to use a plurality of network interfaces in a wireless communication system, according to an embodiment of the present disclosure.

### Best Mode

Now, the above and other aspects of the present invention will be described in detail through preferred embodiments with reference to the accompanying drawings. In the following description of the present invention, a detailed description of known functions and configurations incorporated herein will be omitted when it may obscure the subject matter of the present invention.

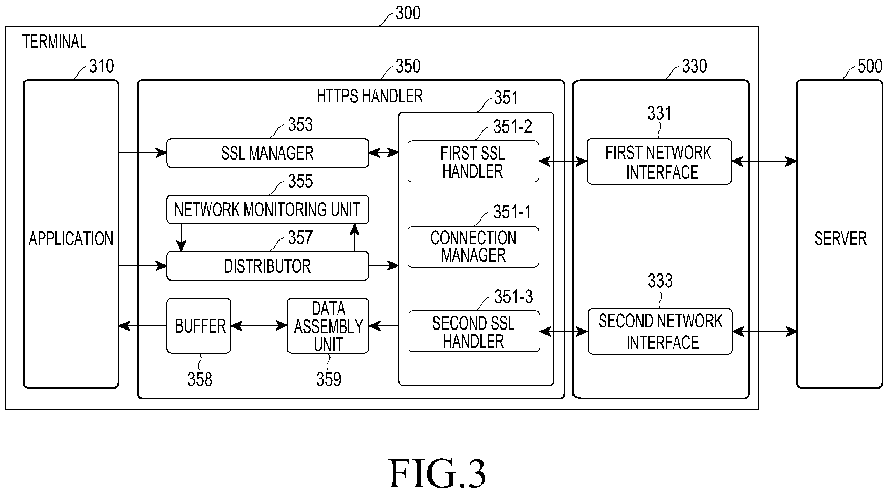

FIG. 3 illustrates a configuration of a terminal of using a plurality of network interfaces in a wireless communication system according to an embodiment of the present disclosure.

Referring to FIG. 3, a terminal 300 may include an application 310 configured to use a HyperText Transfer Protocol (HTTP)-based data service, a network interface unit 330 including a plurality of different network interfaces, and a controller 350 configured to generate a plurality of Transmission Control Protocol (TCP) connections using the plurality of network interfaces to control operation of receiving Hypertext Transfer Protocol Security (HTTPS)-based content.

In FIG. 3, the application 310 may set Secure Sockets Layer (SSL)-related information required for generating a HTTPS session, wherein the SSL-related information may be, for example, various kinds of parameters that are used to generate a Transmission Security Layer/Secure Sockets Layer (TSL/SSL) session, and the parameters may be used to generate a pre-master secret key and a master key, as shown in FIG. 2. The application 310 may be one of various kinds of applications that use HTTPS. Also, according to an embodiment of the present disclosure, the application 310 may be a typical application that uses HTTPS.

The network interface unit 330 may include a first network interface 331 configured to connect to a first wireless network, and a second network interface 333 configured to connect to a second wireless network that is different from the first wireless network. The first and second network interfaces 331 and 333 may support HTTP(S)-based TCP connections. For example, it is assumed that the first network interface 331 is configured to connect to a Wireless-Fidelity (Wi-Fi) network, and the second network interface 333 is configured to connect to a cellular network. However, the Wi-Fi network and the cellular networks are examples of networks capable of supporting TCP connections, and networks to which the present disclosure can be applied are not limited to the Wi-Fi network and the cellular network. Also, in the current embodiment, for convenience of description, the network interface unit 330 is assumed to include two network interfaces, however, the network interface unit 330 may include two or more different network interfaces that support TCP connections.

In the current embodiment, the controller 350 may control communication through the network interface unit 330 according to operation of the application 310. If the controller 350 receives a request for downloading HTTPS-based content from the application 310, the controller 350 may generate a TCP connection and a SSL connection to a server 500 through the first and second network interfaces 331 and 333, respectively, and control operation of receiving traffic of content distributively transmitted upon downloading HTTPS-based content, simultaneously, through the first and second network interfaces 331 and 333. The server 500 may be a Web server that provides WWW-based services.

Whether to simultaneously use the first and second network interfaces 331 and 333 may be decided based on a data amount of the content. If the controller 350 determines that the data amount of the content is larger than a predetermined threshold value, the controller 350 may perform control operation of distributing traffic through the first and second network interfaces 331 and 333, and if the controller 350 determines that the data amount of the content is smaller than or equal to the predetermined threshold value, the controller 350 may perform control operation of receiving the content through a network interface selected from between the first network interface 331 and the second network interface 333, like a conventional method.

Also, the current embodiment relates to an example of a HTTPS-based data service using SSL, however, the controller 350 can control the use of a plurality of network interfaces based on a data amount of content for other HTTP-based data services as well as the HTTPS-based data service, for example, in such a way to use the plurality of network interfaces if the data amount of the content is larger than a predetermined threshold value, and to use a single network interface if the amount of data of the content is smaller than or equal to the predetermined threshold value.

Also, the controller 350 may be implemented as a processor that has a HTTP handler including a plurality of SSL handlers corresponding to a plurality of network interfaces in order to provide the HTTPS-based data service. The HTTPS handler may be embodied as a program, and in this case, the controller 350 may include the program and a microprocessor to drive the program.

In the embodiment of FIG. 3, the controller 350 may include a HTTPS handler for, for example, a HTTPS-based data service, and the HTTPS hander may include a HTTPS manager 351, a SSL manager 353, a network monitoring unit 355, a distributor 357, a buffer 358, and a data assembly unit 359.

If a network access request (for example, a HTTP request) for downloading content is received from the application 310, the distributor 357 may distribute the HTTP request to the first and second interfaces 331 and 333 of the network interface unit 330. At this time, the distributor 357 may decide whether to distributively process the HTTP request according to a data amount of the content. When traffic distribution is performed, the data assembly unit 359 may re-assemble data of content respectively received through the first and second network interfaces 331 and 333, and then transfer the re-assembled data to the buffer 358.

The network monitoring unit 355 may detect data download speeds at the first and second network interfaces 331 and 333, and control download amounts and download speeds of the first and second network interfaces 331 and 333 based on the detected download speeds. According to another embodiment, the network monitoring unit 355 may control download speeds of the first and second network interfaces 331 and 333, based on changes in transmission rate or load states of wireless networks to which the first and second network interfaces 331 and 333 are connected.

In the current embodiment, when traffic of content that is downloaded is distributed, parts of content data that are to be distributively transmitted from the server 500 may be indicated through HTTP requests that are respectively transmitted to the server 500 through the first and second network interfaces 331 and 333.

In the embodiment of FIG. 3, the SSL manager 353 may receive SSL-related information (for example, various parameters to be used upon generating SSL sessions) from the application 310, set SSL parameters for the first and second network interfaces 331 and 333, respectively, and then transfer the results of the settings to the HTTPS manager 351. The HTTPS manager 351 may process a HTTP request/response (for example, a HTTP HEAD request/response, a HTTP RANGE request/response, etc.) received from the distributor 357, and control generation of SSL connections (that is, SSL sessions) through the first and second network interfaces 331 and 333 using the SSL-related information received from the SSL manager 353.

The HTTPS manager 351 may include a connection manager 351-1 and first and second SSL handlers 351-2 and 351-3. The connection manager 351-1 may process the HTTP request/response between the distributor 357 and the server 500, and generate a TCP connection through the first and second network interfaces 331 and 333. The first SSL handler 351-2 may process SSL parameters for the first network interface 331 to generate a first SSL connection to the server 500, and may encrypt/decrypt data that is to be transmitted/received to/from the server 500 through the first network interface 331. The second SSL handler 351-3 may process SSL parameters for the second network interface 333 to generate a second SSL connection to the server 500, and may encrypt/decrypt data that is to be transmitted/received to/from the server 500 through the second network interface 333.

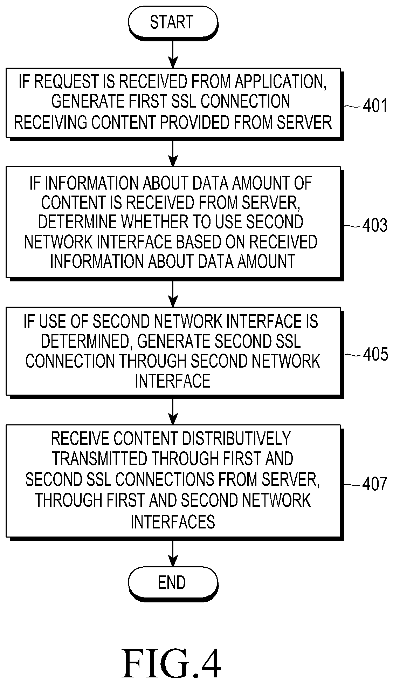

FIG. 4 is a flowchart illustrating a communication method of a terminal (for example, the terminal 300) using a plurality of network interfaces in a wireless communication system, according to an embodiment of the present disclosure.

Referring to FIG. 4, if a HTTPS request for secure downloading of content is received from the application 310, the terminal 300 may generate a first SSL connection through the first network interface 331 for secure reception of the content from the server 500 through a wireless network, in step 401. The first SSL connection may be generated based on SSL-related information set by the application 310.

Then, if information about a data amount of the content that is to be downloaded is received from the server 500, the terminal 300 may compare the received information about the data amount of the content to a predetermined threshold value to thus determine whether to use the second network interface 333, in step 403. In step 403, if the terminal 300 determines that the data amount of the content is larger than the predetermined threshold value, the terminal 300 may determine that the content should be downloaded using both the first and second network interfaces 331 and 333, and if the terminal 300 determines that the data amount of the content is smaller than or equal to the predetermined threshold value, the terminal 300 may determine that the content should be downloaded without using the second network interface 333.

If the terminal 300 determines in step 403 that the content should be downloaded using both the first and second network interfaces 331 and 333, the terminal 300 may generate a second SSL connection through the second network interface 333, in step 405. The second SSL connection may be generated based on the SSL-related information provided from the application 310. Then, the terminal 300 may receive data of the content secured (that is, encrypted) and distributively transmitted through the first and second SSL connections from the server 500, through the first and second network interfaces 331 and 333, in step 407. Herein, an amount and range of data that is distributively transmitted may be designated through message exchange between the terminal 300 and the server 500, and the amount and range of data may be changed through network monitoring of the terminal 300. The network monitoring may be performed periodically or in consideration of network load.

FIG. 4 relates to an example of determining whether to use the second network interface 333 based on the data amount of content. However, it is also possible to use a plurality of available network interfaces or a plurality of predetermined network interfaces when downloading HTTPS-based content, without considering the data amount of the content.

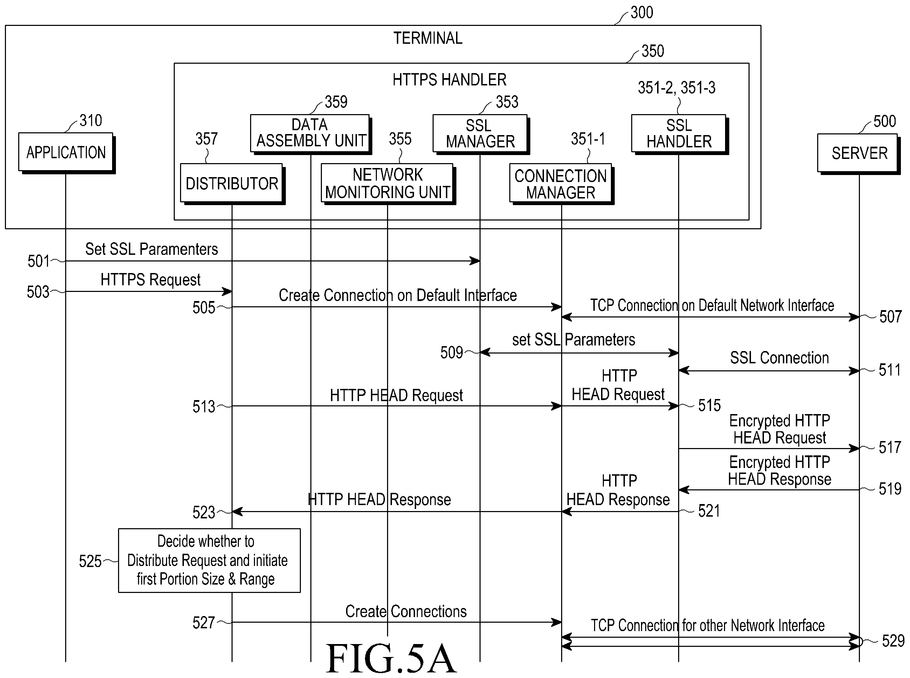

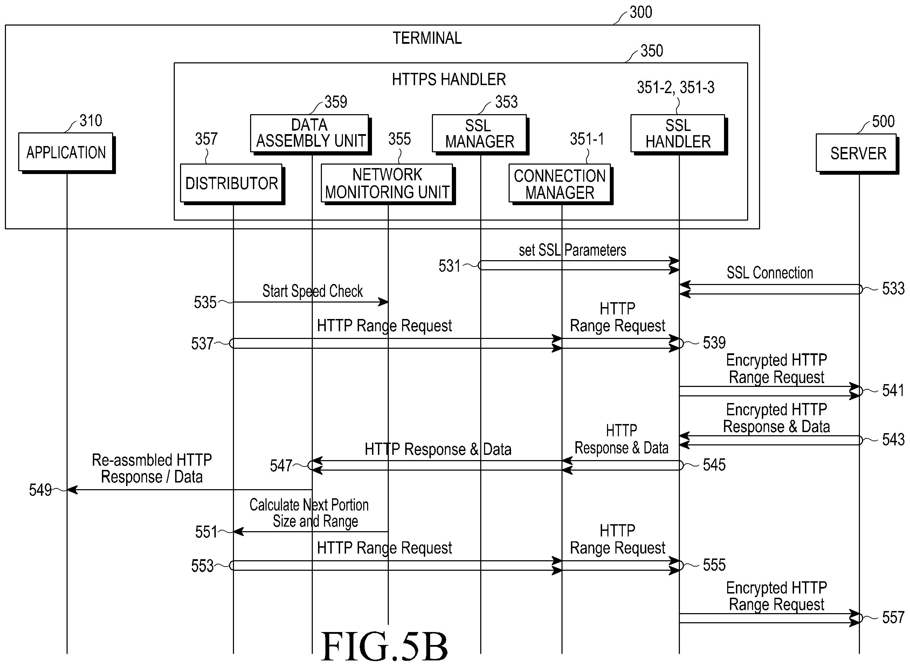

FIGS. 5A and 5B are flowcharts illustrating a method of distributing traffic using a plurality of network interfaces in a wireless communication system, according to an embodiment of the present disclosure.

In FIGS. 5A and 5B, two lines drawn in steps (for example, steps 529, 531, 533, 537 to 547, and 553 to 557) may represent that a plurality of network interfaces are used.

Before the current embodiment is described, a HTTP HEAD request and a HTTP RANGE request that are used in the embodiment of FIGS. 5A and 5B among HTTP requests defined in HTTP standards will be first described below.

The HTTP HEAD request is used to request transmission of information, like a HTTP GET request. However, while the HTTP GET request is used to request transmission of service data (for example, content) corresponding to a Uniform Resource Locator (URL), the HTTP HEAD request is used to request transmission of information about the service data. Meanwhile, the HTTP RANGE request is used to request distributive transmission of service data. The amount and range of service data that is distributively transmitted through a SSL connection of each network interface is indicated in the HTTP RANGE request. In the current embodiment, the terminal 300 may transmit the HTTP HEAD request to the server 500, and receive information about a data amount of the corresponding content from the server 500, as a HTTP HEAD response. Also, the terminal 300 may transmit a HTTP RANGE request indicating at least one of a data amount and range of content that is to be distributively transmitted to each network interface, to the server 500, and receive content distributively transmitted from the server 500 through the corresponding network interface.

More specifically, if the application 310 is executed and a request for downloading content is received, the application 310 may set SSL-related information for downloading the content, in step 501. First, the application 310 may transfer the set SSL-related information to the SSL manager 353, and the SSL manager 353 may store the received SSL-related information. Thereafter, the application 310 may transfer a HTTPS request for secured downloading of the content to the distributor 357, in step 503. The distributor 357 may receive the HTTPS request, and request the connection manager 351-1 to generate a connection through a default network interface, in step 505. The default network interface may be the first network interface 331. If the first network interface 331 is, for example, a Wi-Fi network interface, the second network interface 333 may be a cellular network interface. According to another example, if the first network interface 331 is a cellular network interface, the second network interface 333 may be a Wi-Fi network interface.

The connection manager 351-1 may generate a TCP connection through the first network interface 331, in step 507, and the SSL manager 353 may set SSL parameters for the first network interface 331 based on the SSL-related information, in step 509. Then, the SSL handler 351-2 may generate a SSL connection to the server 500 through the first network interface 331, in step 511. If the SSL connection is generated, the distributor 357 may send a HTTP HEAD request to the connection manager 351-1 to request the connection manager 351-1 to send information about the content in order to check a data amount of the content, in step 513. In steps 515 to 523,the connection manager 351-1 may transfer the HTTP HEAD request to the first SSL handler 351-2, and the first SSL handler 351-2 may encrypt the HTTP HEAD request to the server 500 through the first network interface 331. The server 500 may transmit a HTTP HEAD response including the data amount of the content to the terminal 300, and the HTTP HEAD response may be transferred to the distributor 357 via the first network interface 331, the first SSL handler 351-2, and the connection manager 351-1.

Thereafter, the distributor 357 may determine whether to distribute traffic of the content to the second network interface 333, based on the information about the data amount of the content included in the HTTP HEAD response, in step 525. If the distributor 357 determines that traffic of the content should be distributed, the distributor 357 may decide an amount and range of the content that are to be distributed to the first and second network interfaces 331 and 333, that is, to be distributively transmitted from the server 500. Then, the distributor 357 may request the connection manager 351-1 to generate a TCP connection through the second network interface 333, in step 527. Then, the connection manager 351-1 may request the server 500 to generate a TCP connection through the second network interface 333 so that TCP connections through both the first and second network interfaces 331 and 333 are generated, in step 529, since a TCP connection through the first network interface 331 has already been generated in the step 507.

Thereafter, referring to FIG. 5B, the SSL manager 353 may set SSL parameters for the second network interface 333, based on the SSL-related information, in step 531. Then, the second SSL handler 351-3 may generate a SSL connection to the server 500 through the second network interface 333, in step 533. Thereafter, the distributor 357 may request the network monitoring unit 355 to detect download speeds of the content at the first and second network interfaces 331 and 333, in step 535. Operation of detecting download speeds may be performed periodically or in consideration of network load. In the current embodiment, the terminal 300 may control download amounts and download speeds through the first and second network interfaces 331 and 333, based on the detected download speeds. For example, in step 537, the distributor 357 may send a HTTP RANGE request to the connection manager 351-1, in order to adjust amounts and ranges of the content to be distributively transmitted through the SSL connections of the first and second network interfaces 331 and 333, based on the download speeds detected in step 535.

Then, in steps 539 to 547, the connection manager 351-1 may transfer the received HTTP RANGE request to the first and second SSL handlers 351-1 and 351-2. The first and second SSL handlers 351-1 and 351-2 may encrypt the HTTP RANGE request, and transmit the encrypted HTTP RANGE request to the server 500 through the first and second network interfaces 331 and 333. The server 500 may adjust amounts and ranges of the content to be distributively transmitted through the respective SSL connections, according to the HTTP RANGE request, and transmit a HTTP RANGE response through the respective SSL connections. The HTTP RANGE response and data of the content adjusted, encrypted, and transmitted according to the HTTP RANGE request may be transferred to the data assembly unit 359 via the first and second network interfaces 331 and 333, the first and second SSL handler 351-2 and 351-3, and the connection manager 351-1, sequentially. At this time, the first and second SSL handlers 351-2 and 351-3 may decrypt the encrypted data of the content and the encrypted HTTP RANGE response. Then, the data assembly unit 359 may re-assemble the data of the content distributively received through the first and second network interfaces 331 and 333 to original data, and then transfer the original data to the application 310 together with the HTTP RANGE response, in step 549. Steps 551 to 557 of transmitting a HTTP RANGE request for the next part of the content to be transmitted are the same as steps 535 to 541 described above.

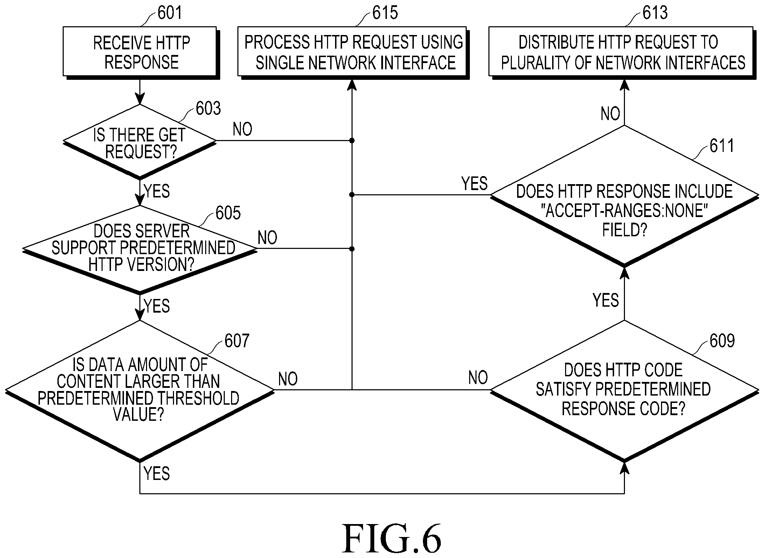

FIG. 6 is a flowchart illustrating a method of enabling a terminal to determine whether to use a plurality of network interfaces in a wireless communication system, according to an embodiment of the present disclosure The method of FIG. 6 corresponds to an example of step 525 of FIG. 5A.

Referring to FIG. 6, after a HTTPS request is received from the application 310, the distributor 357 may receive a HTTP response (also, referred to as a HTTP HEAD response) including information about a data amount of the corresponding content from the server 500, in step 601. The distributor 357 may determine whether the HTTPS request is a GET request defined in the HTTP standards, in step 603. If the distributor 357 determines that the HTTPS request is a GET request, the distributor 357 may determine whether the server 500 supports a predetermined HTTP version (for example, HTTP 1.1 version), in step 605. If the distributor 357 determines that the server 500 supports the predetermined HTTP version, the distributor 357 may determine whether the data amount of the content is larger than a predetermined threshold value, in step 607. If the distributor 357 determines that the data amount of the content is larger than the predetermined threshold value, the distributor 357 may determine whether a HTTP code included in the HTTP HEAD response received from the server 500 satisfies a predetermined response code, in step 609. For example, the response code may be "200 OK" or "206 for partial content" defined in the HTTP standards. If the distributor 357 determines that the HTTP code satisfies the predetermined response code, the distributor 357 may determine whether the HTTP HEAD response includes a "Accept-Ranges:None" field, in step 611. If the distributor 357 determines that the HTTP HEAD response does not include the "Accept-Ranges:None" field, the distributor 357 may determine that the server 500 supports a HTTP RANGE request, and perform operation for distributing traffic to a plurality of network interfaces, in step 613. Meanwhile, if the distributor 357 determines that any one of steps 603, 605, 607, or 609 is not satisfied or determines in step 611 that the HTTP HEAD response includes the "Accept-Ranges:None" field, the distributor 357 may request the connection manager 351-1 to download the content through a single network interface (for example, a default network interface), like the conventional method, in step 615.

According to the embodiments of the present disclosure as described above, since the terminal can download HTTPS-based content using the plurality of network interfaces, the terminal can further improve content download performance by downloading HTTPS-based content simultaneously through the plurality of network interfaces without changing an existing application.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A method for distributing traffic by a terminal in a wireless communication system, the method comprising:
generating (401) a first secure sockets layer, SSL, connection for receiving data of content through a first network interface with a server that provides the content based on hypertext transfer protocol security, HTTPS, if an HTTPS request is received from an application in the terminal;
generating (403,405), based on information about a data amount of the content, a second SSL connection for receiving the data of the content through a second network interface with the server based on the hypertext transfer protocol security, HTTPS; and
receiving (407) the data of the content distributively transmitted through the first SSL connection and the second SSL connection from the server, respectively, through the first network interface and the second network interface.

2. The method of claim 1, wherein the first SSL connection and the second SSL connection are generated based on SSL-related information provided from the application.

3. The method of claim 1, wherein the second SSL connection is generated based on information about a data amount of the content.

4. The method of claim 1, wherein the generating of the second SSL connection is performed if a data amount of the content is greater than a threshold value.

5. The method of claim 1, wherein the generating of the second SSL connection further comprises:
receiving information about a data amount of the content from the server; and
generating the second SSL connection if the data amount of the content is greater than the threshold value.

6. The method of claim 1, further comprising adjusting at least one of a data amount and a range of the content that is to be distributively transmitted through the first SSL connection and the second SSL connection, based on download speeds through the first network interface and the second network interface.

7. The method of claim 6, wherein the adjusting of the at least one of the data amount and the range of the content further comprises:
monitoring download speeds of the first network interface and the second network interface respectively;
determining at least one of a data amount and a range of the content that is to be distributively transmitted, based on the monitored download speeds; and
transmitting an HTTP RANGE request including the at least one of the data amount and the range of the content, to the server.

8. The method of claim 1, wherein the first SSL connection and the second SSL connection are generated through different SSL handlers respectively corresponding to the first SSL connection and the second SSL connection.

9. The method of claim 1, further comprising re-assembling the distributively-transmitted data of the content received through the first network interface and the second network interface to original data.

10. The method of claim 1, wherein the first network interface and the second network interface are different network, and each of the first network interface and the second network interface is one of a Wi-Fi network and a cellular network.

11. The method of claim 1, wherein first data encrypted by the terminal and the server based on SSL parameters is transmitted/received through the first SSL connection and the second SSL connection.

12. A terminal (300) for distributing traffic in a wireless communication system, the terminal comprising:
a plurality of network interfaces (331, 333) configured to communicate with a server (500); and a controller (350) configured to:
generate a first secure sockets layer, SSL, connection (351-2) for receiving data of content through a first network interface with the server that provides the content based on hypertext transfer protocol security, HTTPS, if an HTTPS request is received from an application, generate, based on information about a data amount of the content, a second SSL connection (351-3) for receiving the data of the content through a second network interface with the server based on the hypertext transfer protocol security, HTTPS, and
receive the data of the content that is distributively transmitted through the first SSL connection and the second SSL connection from the server, respectively through the first network interface and the second network interface.

13. The terminal of claim 12, wherein the controller is further configured to generate the first SSL connection and the second SSL connection, based on SSL-related information provided from the application.

14. The terminal of claim 12, wherein the controller is further configured to generate the second SSL connection, based on information about a data amount of the content.

15. The terminal of claim 12, wherein the controller is further configured to generate the second SSL connection if a data amount of the content is greater than a threshold value.

16. The terminal of claim 12, wherein the controller is further configured to adjust at least one of a data amount and a range of the content that is to be distributively transmitted through the first SSL connection and the second SSL connection, based on download speeds through the first network interface and the second network interface.

17. The terminal of claim 16, wherein the controller is further configured to:
monitor download speeds of the first network interface and the second network interface respectively;
determine at least one of a data amount and a range of the content that is to be distributively transmitted, based on the monitored download speeds, and
transmit an HTTP RANGE request including the at least one of the data amount and the range of the content, to the server.

18. The terminal of claim 12, wherein the controller is further configured to generate the first SSL connection and the second SSL connection through different SSL handlers respectively corresponding to the first SSL connection and the second SSL connection.

19. The terminal of claim 12, wherein the controller is further configured to re-assemble the distributively-transmitted data of the content received through the first network interface and the second network interface to original data.

20. The terminal of claim 12, wherein first data encrypted by the terminal and the server based on SSL parameters is transmitted/received through the first SSL connection and the second SSL connection.

## Patentansprüche

1. Verfahren zum Verteilen von Verkehr durch ein Endgerät in einem drahtlosen Kommunikationssystem, wobei das Verfahren Folgendes umfasst:
Erzeugung (401) einer ersten SSL(Secure Sockets Layer)-Verbindung zum Empfang von Inhaltsdaten durch eine erste Netzwerkschnittstelle mit einem Server, der den Inhalt liefert, basierend auf Hypertextübertragungsprotokoll-Sicherheit, HTTPS, wenn eine HTTPS-Anforderung von einer Anwendung in dem Endgerät empfangen wird;
Erzeugung (403, 405), basierend auf Informationen über eine Datenmenge des Inhalts, einer zweiten SSL-Verbindung zum Empfang der Daten des Inhalts über eine zweite Netzwerkschnittstelle mit dem Server, basierend auf Hypertextübertragungsprotokoll-Sicherheit, HTTPS; und
Empfang (407) der Daten des Inhalts, die über die erste SSL-Verbindung bzw. die zweite SSL-Verbindung von dem Server aus über die erste Netzwerkschnittstelle und die zweite Netzwerkschnittstelle verteilt übertragen werden.

2. Verfahren nach Anspruch 1, wobei die erste SSL-Verbindung und die zweite SSL-Verbindung basierend auf SSL-bezogenen Informationen erzeugt werden, die von der Anwendung geliefert werden.

3. Verfahren nach Anspruch 1, wobei die zweite SSL-Verbindung basierend auf Informationen über eine Datenmenge des Inhalts erzeugt wird.

4. Verfahren nach Anspruch 1, wobei die Erzeugung der zweiten SSL-Verbindung durchgeführt wird, wenn eine Datenmenge des Inhalts größer als ein Schwellenwert ist.

5. Verfahren nach Anspruch 1, wobei die Erzeugung der zweiten SSL-Verbindung des Weiteren umfasst:
Empfang von Informationen über eine Datenmenge des Inhalts von dem Server; und
Erzeugung der zweiten SSL-Verbindung, wenn die Datenmenge des Inhalts größer als der Schwellenwert ist.

6. Verfahren nach Anspruch 1, das des Weiteren die Einstellung mindestens einer Datenmenge und/oder eines inhaltlichen Spektrums umfasst, das über die erste SSL-Verbindung und die zweite SSL-Verbindung verteilt zu übertragen ist, basierend auf Download-Geschwindigkeiten über die erste Netzwerkschnittstelle und die zweite Netzwerkschnittstelle.

7. Verfahren nach Anspruch 6, wobei das Einstellen der Datenmenge und/oder des inhaltlichen Spektrums des Weiteren umfasst:
Überwachung von Download-Geschwindigkeiten der ersten Netzwerkschnittstelle bzw. der zweiten Netzwerkschnittstelle;
Ermittlung mindestens einer Datenmenge und/oder eines inhaltlichen Spektrums, das verteilt zu übertragen ist, basierend auf den beobachteten Download-Geschwindigkeiten; und
Übertragung einer HTTP RANGE-Anforderung einschließlich der mindestens einen der Datenmenge und/oder des inhaltlichen Spektrums, an den Server.

8. Verfahren nach Anspruch 1, wobei die erste SSL-Verbindung und die zweite SSL-Verbindung durch verschiedene SSL-Handler erzeugt werden, die der ersten SSL-Verbindung bzw. der zweiten SSL-Verbindung entsprechen.

9. Verfahren nach Anspruch 1, das des Weiteren das Wiederzusammenstellen der verteilt übertragenen Daten des Inhalts, der durch die erste Netzwerkschnittstelle und die zweite Netzwerkschnittstelle empfangen wurde, zu Originaldaten umfasst.

10. Verfahren nach Anspruch 1, wobei die erste Netzwerkschnittstelle und die zweite Netzwerkschnittstelle verschiedene Netze sind, und jedes der beiden ein Wi-Fi Netz oder ein Mobilfunknetz ist.

11. Verfahren nach Anspruch 1, wobei erste Daten, die von dem Endgerät und dem Server verschlüsselt wurden, basierend auf SSL-Parametern, durch die erste SSL-Verbindung und die zweite SSL-Verbindung übertragen/empfangen werden.

12. Endgerät (300) zur Verkehrsverteilung in einem drahtlosen Kommunikationssystem, wobei das Endgerät Folgendes umfasst:
eine Vielzahl von Netzwerkschnittstellen (331, 333), die konfiguriert sind, um mit einem Server (500) zu kommunizieren; und
eine Steuervorrichtung (350), konfiguriert um:
eine erste SSL(Secure Sockets Layer)-Verbindung (351-2) zum Empfang von Inhaltsdaten durch eine erste Netzwerkschnittstelle mit einem Server zu erzeugen, der den Inhalt liefert, basierend auf Hypertextübertragungsprotokoll-Sicherheit, HTTPS, wenn eine HTTPS-Anforderung von einer Anwendung empfangen wird,
basierend auf Informationen über eine Datenmenge des Inhalts, eine zweite SSL-Verbindung (351-3) zum Empfang der Inhaltsdaten durch eine zweite Netzwerkschnittstelle mit dem Server zu erzeugen, basierend auf der Hypertextübertragungsprotokoll-Sicherheit, HTTPS, und
die Inhaltsdaten, die durch die erste SSL-Verbindung und die zweite SSL-Verbindung von dem Server durch die erste Netzwerkschnittstelle bzw. die zweite Netzwerkschnittstelle verteilt übertragen werden, zu empfangen.

13. Endgerät nach Anspruch 12, wobei die Steuervorrichtung des Weiteren konfiguriert ist, um die erste SSL-Verbindung und die zweite SSL-Verbindung zu erzeugen, basierend auf SSL-bezogenen Informationen, die von der Anwendung geliefert werden.

14. Endgerät nach Anspruch 12, wobei die Steuervorrichtung des Weiteren konfiguriert ist, um die zweite SSL-Verbindung zu erzeugen, basierend auf Informationen über eine Datenmenge des Inhalts.

15. Endgerät nach Anspruch 12, wobei die Steuervorrichtung des Weiteren konfiguriert ist, um die zweite SSL-Verbindung zu erzeugen, wenn eine Datenmenge des Inhalts größer als ein Schwellenwert ist.

16. Endgerät nach Anspruch 12, wobei die Steuervorrichtung des Weiteren konfiguriert ist, um mindestens eine Datenmenge und/oder ein inhaltliches Spektrum einzustellen, das durch die erste SSL-Verbindung und die zweite SSL-Verbindung verteilt zu übertragen ist, basierend auf Download-Geschwindigkeiten durch die erste Netzwerkschnittstelle und die zweite Netzwerkschnittstelle.

17. Endgerät nach Anspruch 16, wobei die Steuervorrichtung des Weiteren konfiguriert ist, um:
Download-Geschwindigkeiten der ersten Netzwerkschnittstelle bzw. der zweiten Netzwerkschnittstelle zu beobachten;
eine Datenmenge und/oder ein inhaltliches Spektrum zu ermitteln, das verteilt zu übertragen ist, basierend auf den beobachteten Download-Geschwindigkeiten, und
eine HTTP RANGE-Anforderung einschließlich der Datenmenge und/oder des inhaltlichen Spektrums an den Server zu übertragen.

18. Endgerät nach Anspruch 12, wobei die Steuervorrichtung des Weiteren konfiguriert ist, um die erste SSL-Verbindung und die zweite SSL-Verbindung durch verschiedene SSL-Handler zu erzeugen, die der ersten SSL-Verbindung bzw. der zweiten SSL-Verbindung entsprechen.

19. Endgerät nach Anspruch 12, wobei die Steuervorrichtung des Weiteren konfiguriert ist, um die verteilt übertragenen Daten des Inhalts, die durch die erste Netzwerkschnittstelle und die zweite Netzwerkschnittstelle empfangen wurden, wieder zu Originaldaten zusammenzustellen.

20. Endgerät nach Anspruch 12, wobei erste Daten, die von dem Endgerät und dem Server verschlüsselt wurden, basierend auf SSL-Parametern, durch die erste SSL-Verbindung und die zweite SSL-Verbindung übertragen/empfangen werden.

## Revendications

1. Procédé de distribution de trafic par un terminal dans un système de communication sans fil, le procédé comprenant :
générer (401) une première connexion de couche de connexion sécurisée, SSL, pour recevoir des données de contenu par le biais d'une première interface de réseau avec un serveur fournissant le contenu sur la base d'un protocole de transfert hypertexte sécurisé, HTTPS, si une demande de HTTPS est reçue à partir d'une application par le terminal ;
générer (403, 405), sur la base d'informations concernant une quantité de données du contenu, une deuxième connexion de SSL destinée à recevoir les données du contenu par le biais d'une deuxième interface de réseau avec le serveur sur la base d'un protocole de transfert hypertexte sécurisé, HTTPS ; et
recevoir (407) les données du contenu transmis de manière répartie par le biais de la première connexion de SSL et de la deuxième connexion de SSL depuis le serveur, respectivement, par le biais de la première interface de réseau et de la deuxième interface de réseau.

2. Procédé selon la revendication 1, où la première connexion de SSL et la deuxième connexion de SSL sont générées sur la base d'informations associées à des SSL fournies par l'application.

3. Procédé selon la revendication 1, où la deuxième connexion de SSL est générée sur la base d'informations concernant une quantité de données du contenu.

4. Procédé selon la revendication 1, où la génération de la deuxième connexion de SSL est effectuée si une quantité de données du contenu est supérieure à une valeur de seuil.

5. Procédé selon la revendication 1, où la génération de la deuxième connexion de SSL comprend en outre :
recevoir des informations concernant une quantité de données du contenu depuis le serveur ; et
générer la deuxième connexion de SSL si la quantité de données du contenu est supérieure à la valeur de seuil.

6. Procédé selon la revendication 1, comprenant en outre l'ajustement d'au moins l'une d'une quantité de données et d'une plage du contenu à être transmis de manière répartie par le biais de la première connexion de SSL et de la deuxième connexion de SSL, sur la base de vitesses de téléchargement par le biais de la première interface de réseau et la deuxième interface de réseau.

7. Procédé selon la revendication 6, où l'ajustement de l'au moins une parmi la quantité de données et la plage du contenu comprend en outre :
surveiller les vitesses de téléchargement de la première interface de réseau et de la deuxième interface de réseau respectivement ;
déterminer au moins l'une d'une quantité de données et d'une plage du contenu qui doit être transmis de manière répartie, sur la base des vitesses de téléchargement surveillées ; et
transmettre une demande de PLAGE de HTTP incluant l'au moins une parmi la quantité de données et la plage du contenu, au serveur.

8. Procédé selon la revendication 1, où la première connexion de SSL et la deuxième connexion de SSL sont générées par l'intermédiaire de différents gestionnaires de SSL qui correspondent respectivement à la première connexion de SSL et à la deuxième connexion de SSL.

9. Procédé selon la revendication 1, comprenant en outre le réassemblage des données du contenu transmises de manière répartie reçues par l'intermédiaire de la première interface de réseau et de la deuxième interface de réseau à des données originales.

10. Procédé selon la revendication 1, où la première interface de réseau et la deuxième interface de réseau sont des réseaux différents, et chacune de la première interface de réseau et de la deuxième interface de réseau est l'un d'un réseau Wi-Fi et d'un réseau cellulaire.

11. Procédé selon la revendication 1, où des premières données chiffrées par le terminal et le serveur sur la base de paramètres de SSL sont transmises / reçues par le biais de la première connexion de SSL et de la deuxième connexion de SSL.

12. Terminal (300) pour la distribution de trafic dans un système de communication sans fil, le terminal comprenant :
une pluralité d'interfaces de réseau (331, 333) configurées pour communiquer avec un serveur (500) ; et
un contrôleur (350) configuré pour :
générer une première connexion de couche de connexion sécurisée, SSL, (351-2) pour recevoir des données de contenu par l'intermédiaire d'une première interface de réseau avec le serveur qui fournit le contenu sur la base d'un protocole de transfert hypertexte sécurisé, HTTPS, si une demande de HTTPS est reçue à partir d'une application,
générer, sur la base d'informations concernant une quantité de données du contenu, une deuxième connexion de SSL (351-3) destinée à recevoir les données du contenu par l'intermédiaire d'une deuxième interface de réseau avec le serveur, sur la base du protocole de transfert hypertexte sécurisé, HTTPS, et
recevoir les données du contenu qui est transmis de manière répartie par l'intermédiaire de la première connexion de SSL et de la deuxième connexion de SSL depuis le serveur, par l'intermédiaire de la première interface de réseau et de la deuxième interface de réseau respectivement.

13. Terminal selon la revendication 12, où le contrôleur est configuré en outre pour générer la première connexion de SSL et la deuxième connexion de SSL, sur la base d'informations associées à des SSL fournies par l'appl ication.

14. Terminal selon la revendication 12, où le contrôleur est configuré en outre pour générer la deuxième connexion de SSL, sur la base d'informations concernant une quantité de données du contenu.

15. Terminal selon la revendication 12, où le contrôleur est configuré en outre pour générer la deuxième connexion de SSL, si une quantité de données du contenu est supérieure à une valeur de seuil.

16. Terminal selon la revendication 12, où le contrôleur est configuré en outre pour ajuster au moins l'une d'une quantité de données et d'une plage du contenu qui doit être transmis de manière répartie par le biais de la première connexion de SSL et de la deuxième connexion de SSL, sur la base de vitesses de téléchargement par le biais de la première interface de réseau et de la deuxième interface de réseau.

17. Terminal selon la revendication 16, où le contrôleur est configuré en outre pour :
surveiller les vitesses de téléchargement de la première interface de réseau et de la deuxième interface de réseau respectivement ;
déterminer au moins l'une d'une quantité de données et d'une plage du contenu qui doit être transmis de manière répartie, sur la base des vitesses de téléchargement surveillées, et
transmettre une demande de PLAGE de HTTP incluant l'au moins un élément parmi la quantité de données et la plage du contenu, au serveur.

18. Terminal selon la revendication 12, où le contrôleur est configuré en outre pour générer la première connexion de SSL et la deuxième connexion de SSL par l'intermédiaire de différents gestionnaires de SSL qui correspondent respectivement à la première connexion de SSL et à la deuxième connexion de SSL.

19. Terminal selon la revendication 12, où le contrôleur est configuré en outre pour réassembler les données du contenu transmis de manière répartie reçues par l'intermédiaire de la première interface de réseau et de la deuxième interface de réseau à des données originales.

20. Terminal selon la revendication 12, où des premières données chiffrées par le terminal et le serveur sur la base de paramètres de SSL sont transmises / reçues par l'intermédiaire de la première connexion de SSL et de la deuxième connexion de SSL.
